# EUROPÄISCHE PATENTSCHRIFT

(11) **EP 2 494 313 B1**
(45) Veröffentlichungstag und Bekanntmachung des Hinweises auf die Patenterteilung: **01.04.2015**
(21) Anmeldenummer: 10775766.8
(22) Anmeldetag: 26.10.2010
(51) Int. Cl.: G01D 3/036

(54) **FELDGERÄT ZUR PROZESSINSTRUMENTIERUNG**
FIELD DEVICE FOR PROCESS INSTRUMENTATION
APPAREIL DE TERRAIN POUR L'INSTRUMENTATION DE PROCESSUS

(30) Priorität: 26.10.2009 DE 102009050645
(43) Veröffentlichungstag der Anmeldung: 05.09.2012
(73) Patentinhaber: Siemens Aktiengesellschaft, 80333 München (DE)
(72) Erfinder: MATZEN, Steen Moellebjerg, DK-6470 Sydals (DK)
(86) Internationale Anmeldenummer: PCT/EP2010/066108
(87) Internationale Veröffentlichungsnummer: WO 2011/054696

(56) Entgegenhaltungen:
- EP-B1- 1 192 614
- DE-A1-102007 059 847

## Beschreibung

Die Erfindung betrifft ein Feldgerät zur Prozessinstrumentierung, insbesondere einen Messumformer, mit einem Analogausgang, an welchen eine Zweidrahtleitung zur Übertragung eines analogen Ausgangssignals anschließbar ist, nach dem Oberbegriff des Anspruchs 1.

In der Automatisierungstechnik werden häufig Feldgeräte zur Prozessinstrumentierung eingesetzt, die beispielsweise zur Erfassung und/oder Beeinflussung von Prozessvariablen dienen und durch ein Automatisierungsnetzwerk zum Austausch von Daten miteinander verbunden sind. Feldgeräte, die eine physikalische oder chemische Größe als Prozessvariable erfassen, werden häufig als Messumformer bezeichnet, da sie die jeweilige Größe in einen Messwert umformen und diesen beispielsweise an eine übergeordnete Leitstation oder als Istwert an einen Regler zur weiteren Verarbeitung ausgeben. Beispiele für derartige Messumformer sind Messumformer für Füllstand, Massendurchfluss, Druck, Temperatur, pH-Wert, Leitfähigkeit usw.

Aus der EP 1 192 614 B1 ist ein Messumformer bekannt, der eine physikalische oder chemische Messgröße in ein dem Messwert entsprechendes, auf einer Zweidrahtleitung übertragbares analoges Ausgangssignal umformt. Dazu ist ein geeigneter Sensor für die physikalische oder chemische Messgröße, ein nachgeschalteter Analog/Digital-Umsetzer, eine diesem nachgeordnete Recheneinheit und eine von der Recheneinheit gesteuerte, an die Zweidrahtleitung anschließbare Ausgangsschaltung vorgesehen. Der Sensor formt die Messgröße in ein Sensorsignal um, das in dem Analog/Digital-Umsetzer digitalisiert und in der Recheneinheit zu einem Sollwert aufbereitet wird, mit dem durch eine Regeleinrichtung in der Ausgangsschaltung das analoge Ausgangssignal auf der Zweidrahtleitung eingestellt wird. Der digitale Sollwert als Stromvorgabewert wird in der Ausgangsschaltung zunächst mit einem Digital/Analog-Umsetzer in einen analogen Stromsollwert überführt und durch eine nachfolgende Regelschaltung in einen analogen Schleifenstrom umgesetzt. Der Istwert des Schleifenstroms wird unter Verwendung eines Messelements zur Strom/Spannungs-Wandlung erfasst. Als einfache Messelemente können dazu niederohmige Strommesswiderstände, die auch als Shunts bezeichnet werden, zum Einsatz kommen. Das damit erzeugte Spannungssignal, welches dem Istwert des Schleifenstroms proportional ist, wird einer Vergleichseinrichtung zur Bildung einer Regelabweichung aus dem analogen Stromsollwert und dem Istwert des Schleifenstroms zugeführt. Anhand der Regelabweichung bestimmt ein Regler, der als Analogregler mit einem integrierten Operationsverstärker realisiert ist, zur Ausregelung der Regelabweichung ein Stellsignal für ein Stellglied, das durch eine Transistorschaltung zur Einstellung des Schleifenstroms gebildet wird. Gleichzeitig wird der gemessene analoge Istwert des Schleifenstroms mit Hilfe eines Analog/Digital-Umsetzers digitalisiert und der Recheneinheit als digitaler Istwert zugeführt. Damit ist die Recheneinheit in der Lage, Abweichungen zwischen dem digitalen Istwert und dem digitalen Sollwert zu ermitteln und darauf durch eine entsprechende Nachführung des Sollwerts zu reagieren. Treten unzulässig große Abweichungen auf, wird dies dem Anwender des Feldgeräts mitgeteilt. Dies kann über eine Datenschnittstelle und/oder eine Anzeigevorrichtung zur Übertragung bzw. Anzeige einer Information über die ermittelte Abweichung und damit über den Messfehler erfolgen. Die Datenschnittstelle ist Bestandteil der Ausgangsschaltung und ermöglicht eine Datenkommunikation über die Zweidrahtleitung nach dem HART-Protokoll.

Die Datenkommunikation nach dem HART-Protokoll erfolgt mit einer phasenstetigen Frequenzmodulation mit einer Datenübertragungsrate von 1200 bits/sec. Das frequenzmodulierte Stromsignal, dessen Amplitude kleiner als 600 µA sein soll, wird in bekannter Weise dem analogen Ausgangssignal einer 4- bis 20mA-Schnittstelle überlagert.

Aus der DE 10 2007 059 847 A1 ist ein Feldgerät mit einem Analogausgang bekannt, in welchem eine Fehlfunktion des Reglers oder des Stellglieds für den Schleifenstrom detektiert werden kann. Dazu wird mit Hilfe eines Komparators das Stellsignal auf Einhalten eines vorgebbaren Wertebereichs überwacht. Wenn der Wertebereich verlassen wird, signalisiert ein Anzeigesignal den erkannten Fehlerzustand und es können geeignete Maßnahmen zur Fehlerbehandlung eingeleitet werden. Dies kann beispielsweise die Ausgabe einer Fehlermeldung oder die Meldung eines Wartungsbedarfs an eine übergeordnete Leitstation über die Zweidrahtleitung und/oder die Einnahme eines Sicherheitszustands des Feldgeräts sein. Auf dem analogen Ausgangssignal wird ein Sicherheitszustand durch einen Strompegel angezeigt, der größer als 22,6 mA oder kleiner als 3,5 mA ist.

Ein Problem bei der Überwachung einer Analogausgangsschaltung auf korrekte Funktion stellt der Tiefpassfilter dar, der üblicherweise zur Glättung des analogen Ausgangssignals verwendet werden muss. Insbesondere wenn ein günstiger Pulsweitenmodulator mit nachgeschaltetem Tiefpassfilter zur Digital/Analog-Umsetzung verwendet wird, stellt der Tiefpassfilter, der das analoge Ausgangssignal auf eine Bandbreite von weniger als 25 Hz begrenzen soll, einen wesentlichen Teil der analogen Ausgangsschaltung dar. Weiterhin problematisch ist bei der Überwachung des analogen Ausgangsstroms auf einen korrekt eingestellten Wert das Entfernen des zur Datenübertragung überlagerten frequenzmodulierten Signals, wenn hierzu ein Tiefpassfilter eingesetzt wird. Tiefpassfilter verursachen immer eine Signalverzögerung, sodass ein zur Überwachung am Ausgang gemessener Stromwert gegenüber einem Digitalwert, der zur Erzeugung des analogen Ausgangssignals an einen Digital/Analog-Umsetzer der analogen Ausgangsschaltung gelegt wird, erheblich verzögert ist. Zudem weisen Tiefpassfilter üblicherweise keine konstante Gruppenlaufzeit auf, sodass transiente Signale im Übergangsbereich verfälscht ausgegeben werden. Die Signalverzögerung in der analogen Ausgangsschaltung kann somit nicht in einfacher Weise durch eine korrespondierende Verzögerung des Digitalwerts, der auf den Digital/Analog-Umsetzer gegeben wird, in einer Überwachungseinrichtung kompensiert werden. Eine Möglichkeit zur Umgehung der beschriebenen Probleme wäre, Zeitfenster mit transienten Signalverläufen aus der Überwachung auszuschließen. Eine Überwachung würde dann jedoch einen über einen Mindestzeitraum konstanten Sollwert des Ausgangsstroms voraussetzen. Da jedoch nicht sichergestellt werden kann, dass diese Bedingung in einem vorgegebenen Zeitraum erfüllt wird, könnte damit keine maximale Zeitdauer garantiert werden, in welcher ein Fehlerzustand der analogen Ausgangsschaltung detektiert wird.

Der Erfindung liegt die Aufgabe zugrunde, ein Feldgerät zur Prozessinstrumentierung mit einem Analogausgang, an welchen eine Zweidrahtleitung zur Übertragung eines analogen Ausgangssignals anschließbar ist, zu schaffen, in welchem eine Überwachung der Schaltung zur Erzeugung des analogen Ausgangssignals mit verbesserter Genauigkeit und/oder mit geringeren Anforderungen an den Signalverlauf ermöglicht wird.

Zur Lösung dieser Aufgabe weist das neue Feldgerät der eingangs genannten Art die im kennzeichnenden Teil des Anspruchs 1 angegebenen Merkmale auf. In den Unteransprüchen sind vorteilhafte Weiterbildungen der Erfindung beschrieben.

Die Erfindung hat den Vorteil, dass die Überwachung der analogen Ausgangsschaltung ständig aktiviert sein kann und Zeitfenster, in denen die Überwachung unterbrochen ist, praktisch nicht benötigt werden. Fehlfunktionen der analogen Ausgangsschaltung können somit ohne nennenswerte Verzögerung detektiert werden. Dadurch kann ein Feldgerät im Falle einer Fehlfunktion vergleichsweise schnell in einen sicheren Zustand gebracht werden.

In vorteilhafter Weise ist die Überwachung bei jeder Art von Signalverläufen anwendbar, z. B. bei stufen-, treppen- oder rampenförmigen Übergängen ebenso wie bei einem konstanten Verlauf des analogen Ausgangssignals.

Da lediglich digitale Signale über eine Einrichtung zur galvanischen Trennung zu führen sind, entfällt in vorteilhafter Weise der Aufwand für eine analoge galvanische Trennung in der analogen Ausgangsschaltung. Bezüglich des Herstellungsaufwands der analogen Ausgangsschaltung ist zudem vorteilhaft, dass auf einen aufwendigen Digital/Analog-Umsetzer verzichtet werden kann, da die Umsetzung mit Hilfe einer Pulsweitenmodulation und anschließender Tiefpassfilterung durchgeführt wird. Da der Filter im analogen Teil der analogen Ausgangsschaltung realisiert ist, ist dazu auch keine komplexe Software, die einen großen Teil der in der Recheneinheit zur Verfügung stehenden Rechenleistung beanspruchen würde, nötig.

In besonders vorteilhafter Weise wird bei dem erfindungsgemäßen Feldgerät eine vollständige Überwachung der Schaltung zur Erzeugung des analogen Ausgangssignals ermöglicht. Mit Hilfe des Rücklesekanals für das pulsweitenmodulierte Digitalsignal können nämlich auch Fehler in der Einrichtung zur galvanischen Trennung erkannt werden, die alleine durch die Überwachung des analogen Ausgangssignals auf Einhalten einer vorgebbaren maximalen Abweichung vom Vergleichssignal nicht erkannt würden.

In einer besonders vorteilhaften Weiterbildung ist ein Komparator zur Erzeugung des Anzeigesignals vorgesehen und das Anzeigesignal ist zur weiteren Behandlung eines erkannten Fehlerzustands auf die Recheneinheit geführt. Das hat den Vorteil, dass die Recheneinheit, wenn ein Fehlerzustand erkannt ist, unverzüglich geeignete Maßnahmen zur Fehlerbehandlung einleiten kann. Dies können dieselben Maßnahmen sein, die auch bei Erkennen eines Fehlers durch den Rücklesekanal des pulsweitenmodulierten Digitalsignals ergriffen werden. Dabei können in vorteilhafter Weise ein zusätzlicher Eingang der Recheneinheit für das Anzeigesignal und ein zusätzlicher Kanal in der Einrichtung zur galvanischen Trennung eingespart werden, wenn bei erzeugtem Anzeigesignal durch dieses der Rücklesekanal unterbrochen wird.

In einer weiteren vorteilhaften Weiterbildung kann bei einem Feldgerät, in welchem dem analogen Ausgangssignal ein frequenzmoduliertes Signal nach dem HART-Protokoll überlagert ist, die Einrichtung zur Überwachung der Erzeugung des analogen Ausgangssignals um einen Subtrahierer ergänzt sein, der das überlagerte frequenzmodulierte Signal vom Ausgangssignal entfernt und im Pfad des analogen Ausgangssignals der Einrichtung zur Überwachung des analogen Ausgangssignals auf Einhalten der vorgebbaren maximalen Abweichung vorgeschaltet ist. Durch diese Weiterbildung ist die Überwachungseinrichtung gleichermaßen bei 4- bis 20mA-Schnittstellen mit oder ohne HART-Kommunikation anwendbar und die maximale Abweichung kann derart vorgegeben werden, dass sie kleiner als die Amplitude des überlagerten frequenzmodulierten Signals ist.

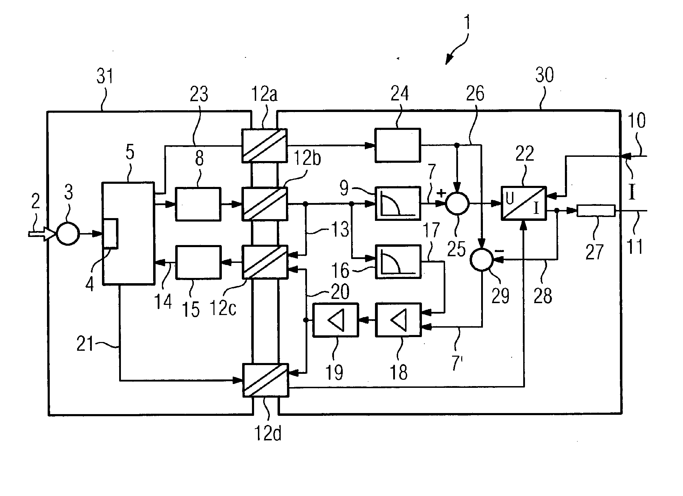

Anhand der Zeichnung, in der ein Ausführungsbeispiel der Erfindung dargestellt ist, werden im Folgenden die Erfindung sowie Ausgestaltungen und Vorteile näher erläutert.

Die Figur zeigt den prinzipiellen Aufbau eines Messumformers 1, der für einen Einsatz in einer automatisierungstechnischen Anlage zur Erfassung einer chemischen oder physikalischen Größe 2 geeignet ist. Die Größe ist auf einen Sensor 3 geführt, der sie in ein elektrisches Signal wandelt. Das so erzeugte analoge Messsignal wird mit einem Analog/DigitalUmsetzer 4 digitalisiert, der sich an einem Analogeingang einer Recheneinheit 5 befindet, in welcher das Messsignal bezüglich Linearität und Temperaturverhalten korrigiert wird. Ein dem Messwert entsprechender, durch die Recheneinheit 5 berechneter digitaler Vorgabewert eines analogen Ausgangssignals 7 wird mit Hilfe eines Digital/Analog-Umsetzers in das analoge Ausgangssignal 7 gewandelt. Der Digital/Analog-Umsetzer ist durch einen Pulsweitenmodulator 8 und einen nachgeschalteten Tiefpassfilter 9 gebildet. Der Pulsweitenmodulator 8 kann als ein von der Recheneinheit 5 gesondertes Bauteil ausgebildet oder als in die Recheneinheit 5 integriert ausgeführt sein, wenn die Recheneinheit 5 selbst in der Lage ist, ein dem digitalen Vorgabewert entsprechendes pulsweitenmoduliertes Digitalsignal zu erzeugen und auszugeben. Durch den Tiefpassfilter 9 wird die Bandbreite des analogen Ausgangssignals 7 auf einen Frequenzbereich unterhalb 25 Hz begrenzt.

Die gezeigte Schaltung zur Erzeugung eines Schleifenstroms I in einer Zweidrahtleitung 10, 11 ist.mit einer Einrichtung zur galvanischen Trennung eines Analogausgangs 30 von Schaltungsteilen 31 mit dem Sensor 3 versehen, die aus vier Gliedern 12a, 12b, 12c und 12d besteht. Jedes dieser Glieder dient zur galvanisch getrennten Übertragung eines Digitalsignals. Zwischen den Pulsweitenmodulator 8 und den Tiefpassfilter 9 ist das Glied 12b geschaltet. Zur Überwachung des Pulsweitenmodulators 8 und des Glieds 12b ist ein Rücklesekanal vorgesehen, durch welchen ein zweites pulsweitenmoduliertes Digitalsignal 13, das hinter dem Glied 12b abgegriffen wird, über das Glied 12c der Einrichtung zur galvanischen Trennung als Rücklesesignal 14 auf die Recheneinheit 5 geführt ist. Das Rücklesesignal 14 stellt einen Digitalwert dar, der mit Hilfe eines Demodulators 15 entsprechend dem zweiten pulsweitenmodulierten Digitalsignal 13 erhalten wird.

Zur Überwachung der korrekten Funktion des Tiefpassfilters 9 dient ein zweiter Tiefpassfilter 16, der vorzugsweise identisch zum Tiefpassfilter 9 ausgebildet ist. Der zweite Tiefpassfilter 16 liefert ein Vergleichssignal 17, das mit einem gemessenen analogen Ausgangssignal 7', welches dem analogen Ausgangssignal 7 entspricht, mit Hilfe eines Glieds 18 zur Differenzbildung und eines Komparators 19 verglichen wird. Wenn die Abweichung des gemessenen analogen Ausgangssignals 7' vom Vergleichssignal 17 einen vorgebbaren maximalen Wert übersteigt, wird ein Anzeigesignal 20 erzeugt, das einen fehlerhaften Zustand anzeigt. Damit für die Zuführung des Anzeigesignals 20 zur Recheneinheit 5 kein zusätzlicher Kanal in der Einrichtung zur galvanischen Trennung benötigt wird, ist dieses mit dem zweiten pulsweitenmodulierten Digitalsignal 13 verknüpft auf das Glied 12c geführt. Liegt ein Pegel des Anzeigesignals 20 zur Fehleranzeige vor, wird die Durchleitung des zweiten pulsweitenmodulierten Digitalsignals 13 über das Glied 12c gesperrt. An dessen Ausfall erkennt die Recheneinheit 5 das Vorliegen des Fehlerzustands. Der so erkannte Fehler kann durch geeignete Ansteuerung einer Anzeigeeinheit des Messumformers 1, die in der Figur der Übersichtlichkeit wegen nicht dargestellt ist, einem Bediener oder über die Zweidrahtleitung 10, 11 einer übergeordneten Leitstation in einer automatisierungstechnischen Anlage gemeldet werden. Auf die beschriebene Weise wird eine vollständige Überwachung der Erzeugung des analogen Ausgangssignals 7 in der Ausgangsschaltung des Messumformers 1 ermöglicht. Zur Meldung, dass sich der Messumformer 1 im gesicherten Zustand befindet, erzeugt die Recheneinheit 5 ein Anzeigesignal 21, welches über das Glied 12d der Einrichtung zur galvanischen Trennung geführt ist und einen Stromregler 22 zur Erzeugung des Schleifenstroms I derart ansteuert, dass der Schleifenstrom I auf einen Wert größer als 22,6 mA oder kleiner als 3,5 mA eingestellt wird.

Die 4- bis 20mA-Schnittstelle des in der Figur dargestellten Messumformers ist zusätzlich in der Lage, eine Datenübertragung gemäß HART-Protokoll durchzuführen. Zum Senden von Daten gibt die Recheneinheit 5 ein Digitalsignal 23 aus, welches über das Glied 12a der Einrichtung zur galvanischen Trennung auf einen Frequenzmodulator 24 geführt ist. Bevor das analoge Ausgangssignal 7 auf den Stromregler 22 gegeben wird, wird diesem mit Hilfe eines Summierers 25 das frequenzmodulierte Ausgangssignal 26 des Frequenzmodulators 24 überlagert. Der Schleifenstrom I besteht somit aus einem analogen Anteil, der dem analogen Ausgangssignal 7 entspricht, sowie einem Wechselanteil entsprechend dem frequenzmodulierten Signal 26. Mit Hilfe eines Messwiderstands 27, der auch zur Istwerterfassung im Regelkreis des Stromreglers 22 dienen kann, wird die Größe des eingestellten Schleifenstroms I erfasst. Ein diese repräsentierendes Ausgangssignal 28 wird auf einen Subtrahierer 29 geführt, durch welchen aus dem Signal 28 der Wechselanteil entfernt wird, welcher dem frequenzmodulierten Signal 26 entspricht. Als Ausgangssignal liefert der Subtrahierer 29 somit das gemessene analoge Ausgangssignal 7', das von dem gemäß HART-Protokoll erzeugten Wechselanteil befreit ist. Durch die Erfassung des Schleifenstroms I hinter dem Stromregler 22 wird auch dieser in vorteilhafter Weise auf korrekte Funktion überwacht. Zusätzlich kann der Stromregler 22 um die bereits aus der eingangs genannten DE 10 2007 059 847 A1 bekannte Überwachungseinrichtung ergänzt werden. In der genannten Druckschrift ist auch der detaillierte Aufbau des Stromreglers 22 beschrieben, der in der vorliegenden Anmeldung der Übersichtlichkeit wegen nicht dargestellt wurde. Die in der vorliegenden Anmeldung beschriebene Überwachung der Erzeugung des analogen Ausgangssignals ist aufgrund der Verwendung des Subtrahierers 29 gleichermaßen bei einer 4- bis 20mA-Schnittstelle mit oder ohne Datenübertragung gemäß HART-Protokoll anwendbar.

Im gezeigten Ausführungsbeispiel wurde ein Messumformer als Feldgerät erläutert. Selbstverständlich ist die Erfindung auch bei anderen Feldgerätetypen mit Analogausgang verwendbar, beispielsweise bei Stellgliedern wie Regelventilen oder bei einer speicherprogrammierbaren Steuerung mit Analogausgabebaugruppe, die beispielsweise zum Anschluss von Stellgliedern über Zweidrahtleitungen geeignet ist.

## Patentansprüche

1. Feldgerät zur Prozessinstrumentierung, insbesondere Messumformer (1),
mit einem Analogausgang, an welchen eine Zweidrahtleitung (10, 11) zur Übertragung eines analogen Ausgangssignals (7) anschließbar ist, und
mit einer Recheneinheit (5),
**dadurch gekennzeichnet**,
dass Mittel (5, 8) vorhanden sind zur Erzeugung eines dem analogen Ausgangssignal (7) entsprechenden, ersten pulsweitenmodulierten Digitalsignals,
dass das erste pulsweitenmodulierte Digitalsignal auf eine Einrichtung zur galvanischen Trennung (12b) geführt ist, welche ein diesem entsprechendes, zweites pulsweitenmoduliertes Digitalsignal (13) ausgibt,
dass ein erster Tiefpassfilter (9) vorhanden ist zur Erzeugung des analogen Ausgangssignals (7) aus dem zweiten pulsweitenmodulierten Digitalsignal (13),
dass eine Einrichtung (12c, 15, 16, 18, 19, 29) zur Überwachung der Erzeugung des analogen Ausgangssignals (7) vorhanden ist,
- mit einem Rücklesekanal (12c, 15), durch welchen das zweite pulsweitenmodulierte Digitalsignal (13) über die Einrichtung zur galvanischen Trennung (12c) zu seiner Überprüfung als Rücklesesignal (14) auf die Recheneinheit (5) zurückgeführt ist,
- mit einem zweiten Tiefpassfilter (16) zur Erzeugung eines Vergleichssignals (17) für das analoge Ausgangssignal (7) aus dem zweiten pulsweitenmodulierten Digitalsignal (13) und
- mit einer Einrichtung (18, 19) zur Überwachung des analogen Ausgangssignals (7) auf Einhalten einer vorgebbaren maximalen Abweichung vom Vergleichssignal (17) und zur Erzeugung eines Anzeigesignals (20), wenn diese überschritten wird.

2. Feldgerät nach Anspruch 1, **dadurch gekennzeichnet, dass** ein Komparator (19) zur Erzeugung des Anzeigesignals (20) vorgesehen ist und dass das Anzeigesignal (20) zur weiteren Behandlung eines erkannten Fehlerzustandes auf die Recheneinheit (5) geführt ist.

3. Feldgerät nach Anspruch 1 oder 2, **dadurch gekennzeichnet, dass** eine Einrichtung (25) zur Bildung eines Ausgangssignals (28) durch Überlagerung eines frequenzmodulierten Signals (26) nach dem HART-Protokoll auf das analoge Ausgangssignal (7) vorhanden ist und
dass die Einrichtung zur Überwachung der Erzeugung des analogen Ausgangssignals (7) einen Subtrahierer (29) zur Entfernung des überlagerten frequenzmodulierten Signals (26) vom Ausgangssignal (28) aufweist.

## Claims

1. Field device for process instrumentation, in particular a measurement transducer (1),
having an analog output, to which a two-wire line (10, 11) for transmitting an analog output signal (7) can be connected, and having a computation unit (5),
**characterized in that**
there are means (5, 8) for generating a first pulse-width-modulated digital signal corresponding to the analog output signal (7),
**in that** the first pulse-width-modulated digital signal is passed to a DC-isolation device (12b) which outputs a second pulse-width-modulated digital signal (13) corresponding to the first digital signal,
**in that** there is a first low-pass filter (9) for generating the analog output signal (7) from the second pulse-width-modulated digital signal (13),
**in that** there is a device (12c, 15, 16, 18, 19, 29) for monitoring the generation of the analog output signal (7),
- having a read-back channel (12c, 15) which returns the second pulse-width-modulated digital signal (13), via the DC-isolation device (12c), to the computation unit (5) as a read-back signal (14) in order to be checked,
- having a second low-pass filter (16) for generating a comparison signal (17) for the analog output signal (7) from the second pulse-width-modulated digital signal (13), and
- having a device (18, 19) for monitoring the analog output signal (7) for compliance with a predefinable maximum deviation from the comparison signal (17) and for generating an indication signal (20) if this deviation is exceeded.

2. Field device according to Claim 1, **characterized in that** a comparator (19) is provided for the purpose of generating the indication signal (20), and **in that** the indication signal (20) is passed to the computation unit (5) for further handling of a detected error state.

3. Field device according to Claim 1 or 2, **characterized in that** there is a device (25) for forming an output signal (28) by superimposing a frequency-modulated signal (26) according to the HART protocol on the analog output signal (7), and
**in that** the device for monitoring the generation of the analog output signal (7) has a subtractor (29) for removing the superimposed frequency-modulated signal (26) from the output signal (28).

## Revendications

1. Appareil de terrain pour l'instrumentation de processus, notamment transducteur ( 1 ) de mesure,
comprenant une sortie analogique, à laquelle peut être raccordée une ligne ( 10, 11 ) bifilaire pour la transmission d'un signal ( 7 ) analogique de sortie et
une unité ( 5 ) informatique,
caractérisé
en ce qu'il y a des moyens ( 5, 8 ) de production d'un premier signal numérique à modulation d'impulsions en largeur correspondant au signal ( 7 ) analogique de sortie,
en ce que le premier signal numérique à modulation d'impulsions en largeur est envoyé à un dispositif de séparation ( 12b ) galvanique, qui émet un deuxième signal ( 13 ) numérique correspondant à modulation d'impulsions en largeur,
en ce qu'il y a un premier filtre ( 9 ) passe bas de production du signal ( 7 ) analogique de sortie à partir du deuxième signal ( 13 ) numérique à modulation d'impulsions en largeur,
en ce qu'il y a un dispositif ( 12c, 15, 16, 18, 19, 29 ) de contrôle de la production du signal ( 7 ) analogique de sortie,
- comprenant un canal ( 12c, 15 ) de lecture en retour, par lequel le deuxième signal ( 13 ) numérique à modulation d'impulsions en largeur est renvoyé à l'unité ( 5 ) informatique, en passant par le dispositif de séparation ( 12c ) galvanique, pour son contrôle en tant que signal ( 14 ) de lecture en retour,
- comprenant un deuxième filtre ( 16 ) passe bas de production d'un signal ( 17 ) de comparaison pour le signal ( 7 ) analogique de sortie, à partir du deuxième signal ( 13 ) numérique à modulation d'impulsions en largeur et
- comprenant un dispositif ( 18, 19 ) de contrôle que le signal ( 7 ) analogique de sortie maintient un écart maximum pouvant être donné à l'avance au signal ( 17 ) de comparaison et de production d'un signal ( 20 ) d'indication, lorsque cet écart est dépassé.

2. Appareil de terrain suivant la revendication 1, **caractérisé en ce qu'**il est prévu un comparateur ( 19 ) de production du signal ( 20 ) d'indication et **en ce que** le signal ( 20 ) d'indication est, pour un traitement supplémentaire d'un état d'erreur détecté, envoyé à l'unité ( 5 ) informatique.

3. Appareil de terrain suivant la revendication 1 ou 2, **caractérisé en ce qu'**il y a un dispositif ( 25 ) de formation d'un signal ( 28 ) de sortie par superposition d'un signal ( 26 ) modulé en fréquence suivant le protocole HART au signal ( 7 ) analogique de sortie et
**en ce que** le dispositif de contrôle de la production du signal ( 7 ) analogique de sortie a un soustracteur ( 29 ) pour éliminer du signal ( 28 ) de sortie le signal ( 26 ) superposé modulé en fréquence.
